# EUROPEAN PATENT SPECIFICATION

(11) **EP 4 379 923 B1**
(45) Date of publication and mention of the grant of the patent: **18.02.2026**
(21) Application number: 22876689.5
(22) Date of filing: 30.08.2022
(51) Int. Cl.: H01M 50/211, H01M 50/249, H01M 50/242

(54) **BATTERY MODULE, BATTERY PACK, VEHICLE, AND METHOD FOR MANUFACTURING BATTERY MODULE**
BATTERIEMODUL, BATTERIEPACK, FAHRZEUG UND VERFAHREN ZUR HERSTELLUNG EINES BATTERIEMODULS
MODULE DE BATTERIE, BLOC-BATTERIE, VÉHICULE ET PROCÉDÉ DE FABRICATION DE MODULE DE BATTERIE

(30) Priority: 28.09.2021 KR 20210128158
(43) Date of publication of application: 05.06.2024
(73) Proprietor: LG Energy Solution, Ltd., Seoul 07335 (KR)
(72) Inventor: LEE, Chan Kyu, Daejeon 34122 (KR)
(74) Representative: Plasseraud IP
(86) International application number: PCT/KR2022/012984
(87) International publication number: WO 2023/054914

(56) References cited:
- CN-A- 107 331 806
- CN-A- 111 554 837
- CN-A- 112 563 635
- KR-A- 20150 057 363
- KR-A- 20190 063 109
- KR-A- 20190 138 072
- KR-A- 20210 010 345
- US-B2- 10 541 393

## Description

### TECHNICAL FIELD

The present disclosure relates to a battery module, a battery pack, a vehicle, and a battery module manufacturing method, and more particularly, to a battery module, which reduces manufacturing costs of a module housing and improves durability, a battery pack and vehicle including the battery module, and a method for manufacturing the battery module.

### BACKGROUND ART

Currently commercialized secondary batteries include nickel-cadmium batteries, nickel-hydrogen batteries, nickel-zinc batteries, lithium secondary batteries, and the like. The lithium secondary batteries are freely chargeable and dischargeable because of having little memory effect compared to nickel-based secondary batteries. Owing to merits of very low self-discharge rate and high energy density, there is high interest in lithium secondary batteries.

In the lithium secondary batteries, a lithium-based oxide and a carbonaceous material are mainly used as a positive electrode active material and a negative electrode active material, respectively. The lithium secondary batteries each include an electrode assembly, in which a positive electrode plate and a negative electrode plate that are coated with the positive electrode active material and the negative electrode active material, respectively, are disposed with a separator therebetween, and an exterior material that seals and accommodates the electrode assembly together with an electrolyte.

In general, according to exterior material types, the lithium secondary batteries may be classified into a can type secondary battery and a pouch type secondary battery. In the can type secondary battery, an electrode assembly is embedded in a metal can. In the pouch type secondary battery, an electrode assembly is embedded in a pouch made of an aluminum laminate sheet.

Recently, the secondary batteries are widely used in not only small-sized devices such as portable electronic devices, but also medium to large-sized devices such as vehicles or power storage systems. At least one battery module may be mounted in such a medium to large-sized device. In order to increase the capacity and output of such a battery module, a large number of battery cells may be accommodated in a module housing. For example, a pouch type secondary battery cell that is capable of being easily stacked is mostly used in the medium to large-sized device. Here, the pouch type battery cell refers to a secondary battery in which an electrode assembly is accommodated in a pouch made of a flexible polymer material having a variable shape.

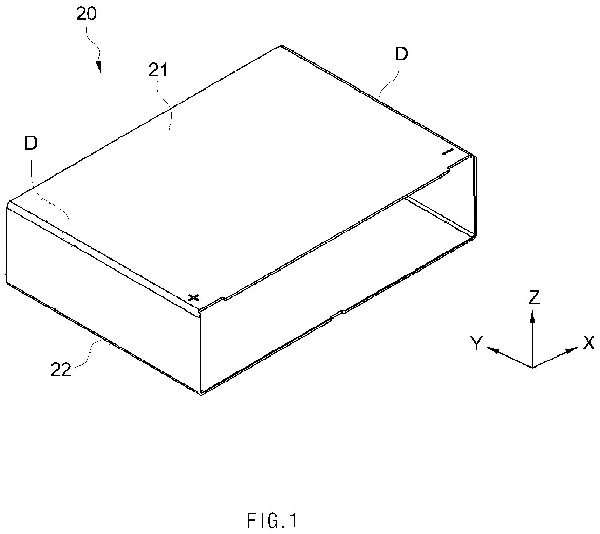

FIG. 1 is a perspective view schematically illustrating a module housing of a battery module according to the related art.

A module housing 20 according to the related art may have an inner accommodation space in which a plurality of battery cells (not shown) are accommodated. An upper cover 21 and a lower frame 22 may be coupled to each other to manufacture the module housing 20. Here, each of two ends of the upper cover 21 in a left-right direction (an X axis direction) and each of upper cross-sections of the lower frame 22 may be coupled to each other at an edge portion D. The module housing 20 having such a coupling structure has a problem that when the battery cells accommodated in the module housing 20 swell up (volume expansion) during charging or discharging of the battery module, a stress caused by a pressing force exerted from the swelling of the battery cells tends to concentrate at the edge portion D of the module housing 20, which is a coupling portion of the upper cover 21 and the lower frame 22. This causes a problem that, in the battery module according to the related art, the edge portion D that is the coupling portion of the upper cover 21 and the lower frame 22 is easily broken or separated.

Moreover, the battery module according to the related art has a problem that when the thickness of the lower frame 22 excessively increases so as to increase a bonding force between the upper cover 21 and the lower frame 22, material costs of the lower frame 22 increase and the weight of the battery module increases. In particular, when a plurality of battery modules are mounted in, for example, an electric vehicle, the weight of the battery module should not increase for a vehicle weight reduction.

### [Prior art documents]

(Patent document 1) KR 10-2019-0127056 A
(Patent document 2) JP 2015-111493 A
(Patent document 3) KR 10-2017-0030954 A
(Patent document 4) KR 10-2019-0138072 A

Documents KR 2021/0010345 A, CN 107 331 806 A and US 10 541 393 B2 disclose battery modules comprising module housing comprising two parts assembled through coupling elements.

### DISCLOSURE OF THE INVENTION

### TECHNICAL PROBLEM

The present disclosure provides a battery module, which reduces manufacturing costs of a module housing and improves durability, a battery pack and vehicle including the battery module, and a method for manufacturing the battery module.

### TECHNICAL SOLUTION

The problem is solved by the battery module according to claim 1 and the method according to claim 10. Favorable embodiments are set out in the dependent claims.

In an embodiment, a coupling groove may be defined in the second extension part of the second frame, wherein the coupling groove has a shape recessed from an end of the second extension part in an extension direction toward a direction opposite to the extension direction. In the coupling plate, the second portion may include a protruding insertion part protruding from an end of the coupling plate so as to be inserted into the coupling groove.

In another embodiment, the protruding insertion part may include a wedge-shaped protrusion protruding from an end of the protruding insertion part so as to press an inner side surface of the coupling groove.

In further another embodiment, a portion of the second extension part, which is coupled to the second portion of the coupling plate, may have a first inclined surface, and the second portion of the coupling plate, which is coupled to the second extension part, may have a second inclined surface parallel to the first inclined surface.

In further another embodiment, the first inclined surface may have a shape of which a height of the first inclined surface gradually decreases toward the inside of the battery module. The second inclined surface may have a shape of which a height of the second inclined surface gradually increases toward the outside of the battery module.

According to another embodiment of the present disclosure, the first portion may be a plate-shaped wide surface of the coupling plate, the second portion may face and be in contact with an end of the second extension part, and the coupling plate may further include a stopper extending from the second portion so as to surround the second extension part.

The coupling plate may be elongated in a direction parallel to the first extension part and the second extension part.

According to an embodiment of the present disclosure, a battery pack includes at least one battery module according to an embodiment of the present disclosure.

According to an embodiment of the present disclosure, a vehicle includes at least one battery module according to an embodiment of the present disclosure.

### ADVANTAGEOUS EFFECTS

The battery module according to the present disclosure includes the coupling plates coupled to the first extension part of the first frame and the second extension part of the second frame, respectively. Accordingly, when compared to the structure in which the upper cover and the lower frame are directly coupled to each other like the module housing of the battery module according to the related art in FIG. 1, it is not necessary to increase the thickness of the first frame or second frame of the module housing so as to increase the coupling area of the first frame or the second frame and thus, the manufacturing costs may be reduced and the weight reduction of the battery module may be achieved.

Moreover, the battery module according to the present disclosure includes the coupling plate spaced apart in a direction that is away from the end of the first extension part of the first frame in the extension direction. Accordingly, when compared to the structure in which the respective ends (at edge portion) of the upper cover and lower frame of the module housing according to the related art in FIG. 1 are coupled to each other, even when the battery cell accommodated in the module housing swells up (volume expansion), the breakage or separation between the coupling plate and the second extension part of the second frame, which is caused by the pressing force exerted from the swelling, may be relatively reduced.

### BRIEF DESCRIPTION OF THE DRAWINGS

FIG. 1 is a perspective view schematically illustrating a module housing of a battery module according to the related art.
FIG. 2 is a perspective view schematically illustrating a battery module according to one embodiment of the present disclosure.
FIG. 3 is an exploded perspective view schematically illustrating the battery module according to an embodiment of the present disclosure.
FIG. 4 is a partial front view schematically illustrating a part of a module housing of the battery module according to an embodiment of the present disclosure.
FIG. 5 is a perspective view schematically illustrating a battery module according to another embodiment of the present disclosure.
FIG. 6 is a partial front view schematically illustrating a part of a module housing of the battery module according to the other embodiment of the present disclosure.
FIG. 7 is a partial perspective view schematically illustrating a part of a second frame of the battery module according to an embodiment of the present disclosure.
FIG. 8 is a perspective view schematically illustrating a first frame and a coupling plate of the battery module according to an embodiment of the present disclosure.
FIG. 9 is a partial perspective view schematically illustrating a part of the first frame and the coupling plate of the battery module according to an embodiment of the present disclosure.
FIG. 10 is a partial side view schematically illustrating a part of a second frame and a coupling plate of a battery module according to another embodiment of the present disclosure.
FIG. 11 is a partial front view schematically illustrating a part of a module housing of a battery module according to another embodiment of the present disclosure.
FIG. 12 is a partial front view schematically illustrating a part of a module housing of a battery module according to further another embodiment of the present disclosure.
FIG. 13 is a perspective view schematically illustrating a battery pack according to an embodiment of the present disclosure.
FIG. 14 is a schematic diagram schematically illustrating a vehicle according to an embodiment of the present disclosure.

### MODE FOR CARRYING OUT THE INVENTION

Hereinafter, the present disclosure will be described in detail with reference to the accompanying drawings. The detailed descriptions of related well-known art or elements that may unnecessarily obscure subject matters of the present disclosure, will be ruled out. The following exemplary embodiments may be modified to various types and the scope of the technical spirit of the present disclosure is not limited by the following embodiments. Rather, these embodiments are provided so that this disclosure will be thorough and complete, and will fully convey the technical spirit of the present disclosure to those skilled in the art.

It should be understood that the techniques set forth in the present disclosure are not intended to be limited to the particular embodiments, but cover various modifications, equivalents, and/or alternatives of embodiments of the present disclosure.

In the drawings, like reference numerals may refer to like elements throughout.

The terms such as "has", "may have", "includes", or "may include", used herein, specify the presence of stated features (e.g., values, functions, operations, or components such as a part), but do not preclude the presence of additional features.

As used herein, the expression such as "A or B", "at least one of A and/or B", or "one or more of A and/or B", may include all possible combinations of the items listed. For example, the expression "A or B", "at least one of A and B", or "at least one of A or B" may indicate all of the following cases: (1) at least one A is included; (2) at least one B is included; and (3) both at least one A and at least one B are included.

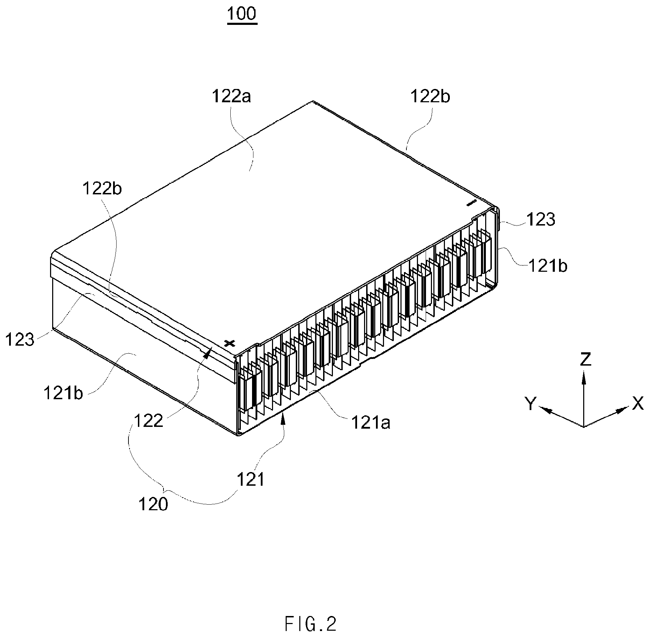

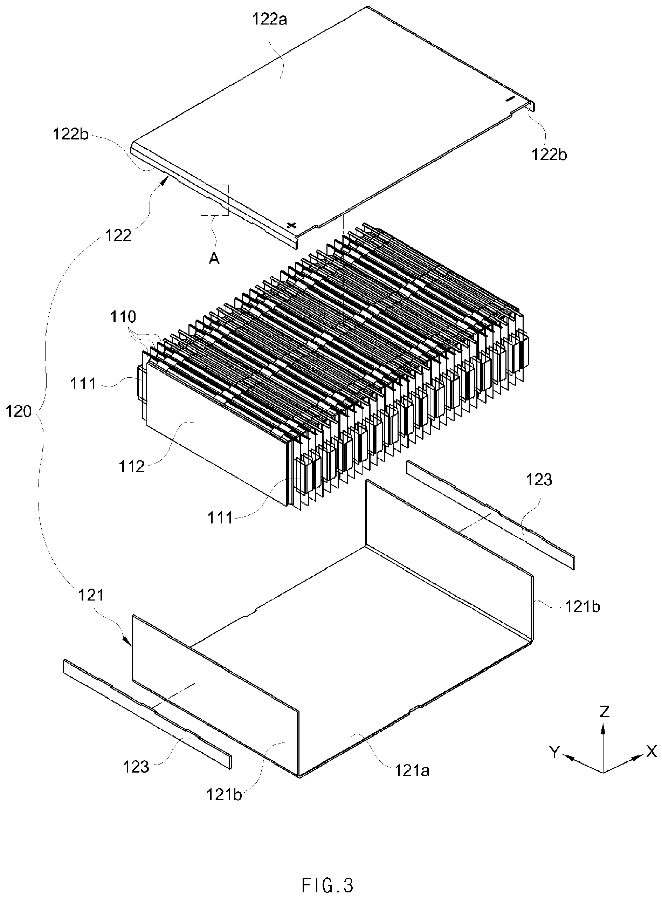

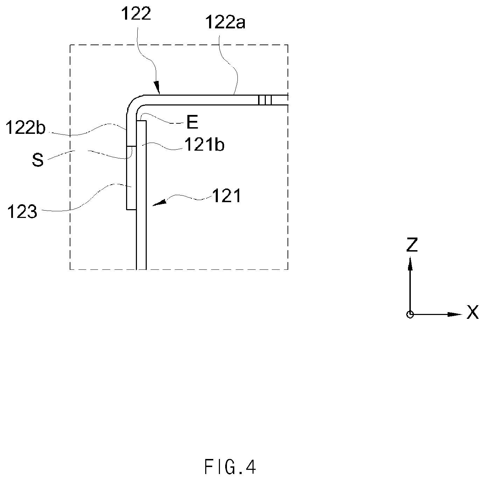

FIG. 2 is a perspective view schematically illustrating a battery module 100 according to an embodiment of the present disclosure. FIG. 3 is an exploded perspective view schematically illustrating the battery module 100 according to an embodiment of the present disclosure. FIG. 4 is a partial front view schematically illustrating a part of a module housing 120 of the battery module 100 according to an embodiment of the present disclosure. For reference, an X axis direction shown in FIG. 2 is a right direction, a Y axis direction is a backward direction, and a Z axis direction is an upward direction.

Referring to FIGS. 2 to 4, the battery module 100 according to an embodiment of the present disclosure includes at least one battery cell 110 and the module housing 120.

Specifically, the battery cell 110 may be, for example, a secondary battery including a pouch type case made of a flexible material. However, the battery cell 110 is not necessarily limited to this type, and may be a prismatic type battery or a cylinder type battery. The pouch type case may include at least one laminate sheet. The laminate sheet may have a structure in which a thin metal film (e.g., Al film) is laminated between a water-resistant polymer film (nylon) and a thermally adhesive polymer film (e.g., casted polypropylene). The structure of the laminate sheet and materials constituting respective layers are widely known in the art to which the present disclosure belongs and thus, the detailed description thereof will be omitted herein.

The battery cell 110 includes an electrode assembly, which is assembled in a configuration in which a positive electrode plate coated with a positive electrode active material, a negative electrode plate coated with a negative electrode active material, and a separate interposed between the positive electrode plate and the negative electrode plate, are stacked, and a battery case (pouch type case) that seals and accommodates the electrode assembly together with an electrolyte.

Electrode lead 111 may be provided at, for example, a front end and rear end of the battery cell 110, respectively. According to electrical polarity, the electrode leads 111 may be classified into a positive electrode lead and a negative electrode lead.

An accommodation space is defined in the module housing 120 so as to accommodate a plurality of battery cells 110 therein. The module housing 120 includes a first frame 121, a second frame 122, and a coupling plate 123. The first frame 121 includes a body 121a and first extension parts 121b. The plurality of battery cells 110 is mounted in, for example, an upper portion of the body 121a. The body 121a may have a plate shape extending widely in horizontal directions (the X axis direction and the Y axis direction) so as to support the plurality of battery cells 110 in the upward direction. Each of the first extension parts 121b has a shape extending from each of two ends of the body 121a in at least one direction. For example, as in FIG. 3, each of the first extension parts 121b may have a shape extending from each of a left end and right end of the body 121a in the upward direction (e.g., the Z axis direction). The first frame 121 may be made of a metal material. The first frame 121 may include, for example, an aluminum alloy having excellent thermal conductivity, or stainless steel.

The second frame 122 includes a cover 122a and second extension parts 122b. More specifically, the cover 122a is disposed to face the body 121a in the upward direction (e.g., the Z axis direction). That is, the cover 122a may be spaced a predetermined distance from the body 121a. The module housing 120 includes the accommodation space in which the at least one battery cell 110 is accommodated between the cover 122a and the body 121a. Each of the second extension parts 122b has a shape extending from each of two ends of the cover 122a in at least one direction, for example, the Z axis direction. The second extension parts 122b are disposed to face the first extension parts 121b, respectively. For example, the second extension part 122b may be disposed to be in close contact with an outer surface of the first extension part 121b. The second frame 122 may include, for example, an aluminum alloy having excellent thermal conductivity, or stainless steel.

A plurality of coupling plates 123 may be each spaced apart in a direction that is away from an end E of the first extension part 121b of the first frame 121 in an extension direction (the Z axis direction). For example, as in FIG. 4, the coupling plate 123 is spaced a predetermined distance from an upper end (in the Z axis direction) of the first extension part 121b of the first frame 121 in a downward direction. For example, the coupling plate 123 includes a first portion coupled to the first extension part 121b. The first portion of the coupling plate 123 may be coupled to the outer surface of the first extension part 121b of the first frame 121. For example, as in FIG. 3, at least a portion (the first portion) of a left side surface or right side surface of the coupling plate 123 may be coupled to the outer surface of the first extension part 121b of the first frame 121. For example, the coupling plate 123 may be coupled to an outer side surface (the outer surface in a negative direction or positive direction of the X axis) of the first extension part 121b. The coupling method may be welding. The coupling plate 123 includes a second portion coupled to the second extension part 122b. The second portion may face and be in contact with an end of the second extension part 122b. For example, an upper cross-section of the coupling plate 123 may be coupled to a lower end of the second extension part 122b of the second frame 122.

The coupling plate 123 may be elongated in a direction parallel to the first extension part 121b and the second extension part 122b.

Thus, according to such a configuration of the present disclosure, the battery module 100 according to the present disclosure includes the coupling plates 123 coupled to the first extension part 121b of the first frame 121 and the second extension part 122b of the second frame 122, respectively. Accordingly, when compared to the structure in which the upper cover 21 and the lower frame 22 are directly coupled to each other like the module housing 20 of the battery module according to the related art in FIG. 1, it is not necessary to increase the thickness of the first frame 121 or second frame 122 of the module housing 120 so as to increase an coupling area of the first frame 121 or the second frame 122 and thus, manufacturing costs may be reduced and a weight reduction of the battery module 100 may be may be achieved.

Moreover, the battery module 100 according to the present disclosure includes the coupling plate 123 spaced apart in a direction that is away from the end of the first extension part 121b of the first frame 121 in the extension direction. Accordingly, when compared to the structure in which the respective ends of the upper cover 21 and lower frame 22 of the module housing 20 according to the related art in FIG. 1 are coupled to each other, the breakage of an edge portion may be relatively reduced even when the battery cell 110 accommodated in the module housing 20 swells up (volume expansion) and the pressing force exerted from the swelling concentrates at an edge.

That is, unlike the module housing 20 of the battery module according to the related art in FIG. 1, in the battery module 100 according to the present disclosure, respective ends of the first frame 121 and the second frame 122 are not directly coupled to each other, and the second extension part 122b of the second frame 122 is coupled through the coupling plate 123 spaced apart in a direction that is away from the end of the first extension part 121b of the first frame 121 in the extension direction. Accordingly, even in the case of a displacement in which the first extension part 121b is pressed due to the swelling of the battery cell 110 to be pushed outward (in the X axis direction), a displacement of the end of the coupling plate 123 coupled to the second extension part 122b is less than a displacement of the end of the first extension part 121b in the extension direction, so that occurrences of the breakage and separation of a coupling portion (e.g., the edge portion D in FIG. 1) of the module housing 120, which are caused by the swelling of the battery cell 110, may be reduced. Thus, the battery module 100 according to the present disclosure may increase mechanical strength of the coupling portion between the components of the module housing 120 so as to increase the durability.

Referring to FIGS. 2 and 3 again, the first portion of the coupling plate 123 of the battery module 100 according to the present disclosure may be disposed to be in contact with the outer side surface of the first extension part 121b of the first frame 121. For example, as in FIG. 3, the first portion of one of the coupling plates 123 may be coupled to a left outer surface the first extension part 121b disposed at a left side of the first frame 121, and the other coupling plate 123 may be coupled to a right outer surface of the first extension part 121b disposed at a right side of the first frame 121. For example, the coupling plate 123 may have a plate shape, and the first portion may be a plate-shaped wide surface of the coupling plate.

The second extension part of 122b of the second frame 122 may have an inner side surface facing the outer side surface of the first extension part 121b of the first frame 121. For example, as in FIG. 3, the inner side surface of the second extension part 122b may face the left outer surface of the first extension part 121b disposed at the left side of the first frame 121, and the other second extension part 122b may face the right outer surface of the first extension parts 121b disposed at the right side of the first frame 121. The inner side surface of the second extension part 122b may be disposed at a position closer to the cover 121a than the first portion is.

Each of the second extension parts 122b of the second frame 122 may have an end S of in the extension direction coupled to the second portion of the coupling plate 123. For example, as in FIGS. 2 and 4, in one of the second extension parts 122b of the second frame 122, which is disposed relatively left, an end (a bottom surface) in a direction extending from the cover 122a may be coupled to an upper end (the second portion) of the coupling plate 123. In the other second extension part 122b disposed relatively right, an end in the direction extending from the cover 122a may be coupled to an upper end (the second portion) of the coupling plate 123. Here, welding may be used as the coupling method. For example, the welding may be laser welding.

The first portion and second portion of the coupling plate 123 may be disposed on different planes.

According to such a configuration of the present disclosure, the first portion of the coupling plate 123 of the battery module 100 according to the present disclosure is disposed on the outer side surface of the first extension part 121b of the first frame 121, so that a damage of the battery cell 110 accommodated in the module housing 120, which may occur during the coupling of the second extension part 122b to the coupling plate 123, may be prevented. That is, since the first portion of the coupling plate 123 is disposed at the outer side of the first extension part 121b of the first frame 121, the battery module 100 according to the present disclosure may prevent the battery cell 110 accommodated in the module housing 120 from being heated due to welding heat generated during the welding of the second extension part 122b to the coupling plate 123, or prevent high-temperature welding debris from moving to the battery cell 110 to damage the case of the battery cell 110. Accordingly, the structure of the battery module 100 according to the present disclosure may reduce a defect caused by the damage of the battery cell 110, which may occur during the coupling of the second extension part 122b to the coupling plate 123.

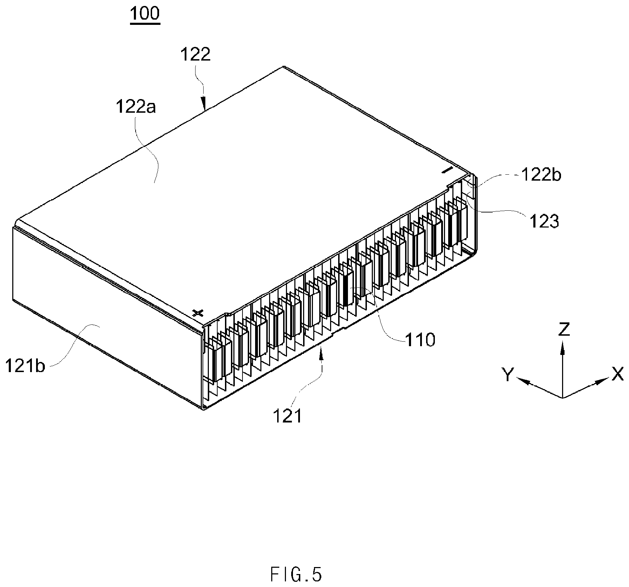

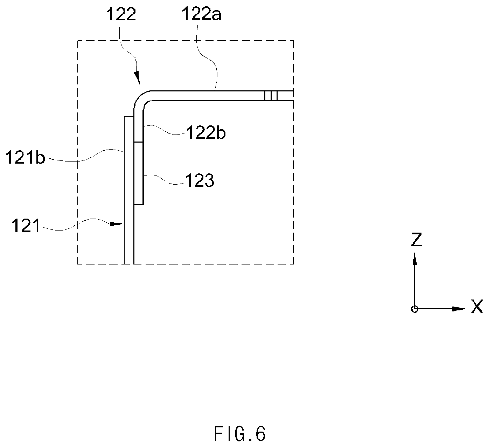

FIG. 5 is a perspective view schematically illustrating a battery module 100 according to another embodiment of the present disclosure. FIG. 6 is a partial front view schematically illustrating a part of a module housing 120 of the battery module 100 according to the other embodiment of the present disclosure.

Referring to FIGS. 5 and 6, a first portion of each of coupling plates 123 of the battery module 100 according to the other embodiment of the present disclosure may be disposed to be in contact with an inner side surface of each of first extension parts 121b of a first frame 121. The first portion and a second portion of the coupling plate 123 may be disposed on different planes. For example, as in FIG. 6, the outer side surface of one of the coupling plates 123 may be coupled to the inner side surface of the first extension part 121b disposed at a left side of the first frame 121. The outer side surface of the other coupling plate 123 disposed relatively right may be coupled to the inner side surface of the second extension part 122b disposed at a right side of the first frame 121.

Each of second extension parts 122b of a second frame 122 may face the inner side surface of the first extension part 121b of the first frame 121. For example, as in FIG. 6, the outer side surface of one of the second extension parts 122b may face the inner side surface of the first extension part 121b disposed at the left side of the first frame 121. The other second extension part 122b disposed relatively right may face the inner side surface of the first extension part 121b disposed at the right side of the first frame 121. The outer side surface of the second extension part 122b may be disposed at a position closer to a cover 121a than the first portion of the coupling plate 123 is.

Moreover, the second extension part 122b of the second frame 122 may have an end in an extension direction coupled to the coupling plate 123. For example, as in FIG. 6, in one of the second extension parts 122b of the second frame 122, which is disposed relatively left, an end in a direction extending from the cover 122a may be coupled to an upper end of the coupling plate 123. In the other second extension part 122b disposed relatively right, an end in the direction extending from the cover 122a may be coupled to an upper end of the coupling plate 123. Here, welding may be used as the coupling method. For example, the welding may be laser welding.

Thus, according to such a configuration of the present disclosure, the coupling plate 123 of the battery module 100 according to the present disclosure is disposed on the inner side surface of the first extension part 121b of the first frame 121 so that a protruding portion is not present on an outer appearance of the module housing 120. Accordingly, for example, an interference (interruption), which may occur during accommodating of the battery module 100 in the accommodation space in which the battery module 100 is accommodated inside a vehicle, may be reduced to facilitate an operation in which a worker installs or replaces the battery module 100. In addition, a space occupied by the battery module 100 in the accommodation space may be reduced to increase the number of the battery module 100 mounted in a battery accommodation space having the same size.

Referring to FIG. 2 again, in the battery module 100 according to the present disclosure, each of the second extension parts 122b of the second frame 122 may be bonded to at least one side of the coupling plate 123. As illustrated in FIG. 2, each of the second extension parts 122b may be coupled to an upper side of the coupling plate 123 coupled to the first extension part 121b. However, this embodiment is not essentially limited to the above-described coupling structure. For example, each of the second extension parts 122b may be coupled to the upper side (in the Z axis direction), a front side (in a negative direction of the Y axis), and a rear side (in a positive direction of the Y axis) of the coupling plate 123. In this case, when compared to when the second extension part 122b is coupled only to the upper side of the coupling plate 123, the second extension part 122b may have the greater bonding force and thus, the durability of the module housing 120 may further increase.

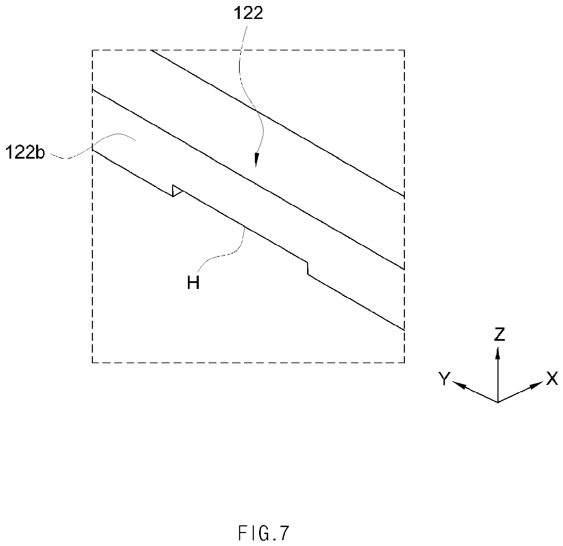

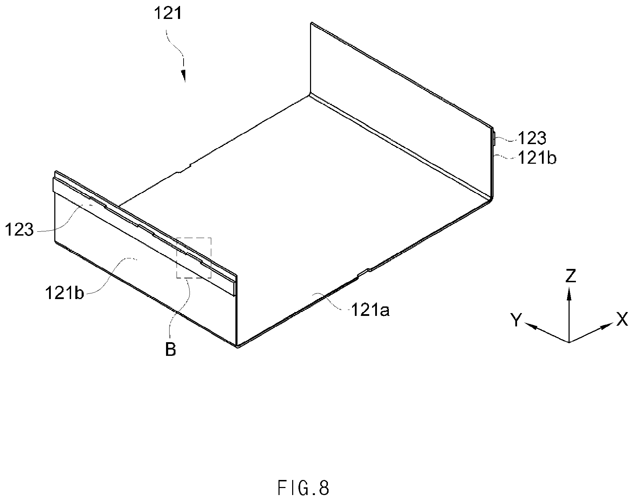

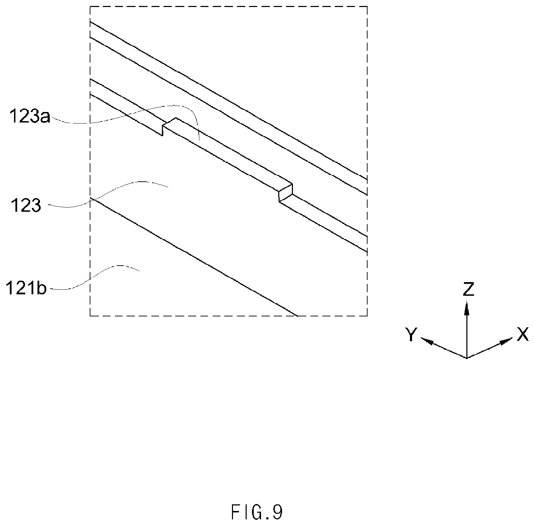

FIG. 7 is a partial perspective view schematically illustrating a part of the second frame 122 of the battery module 100 according to an embodiment of the present disclosure. FIG. 8 is a perspective view schematically illustrating the first frame 121 and the coupling plate 123 of the battery module 100 according to an embodiment of the present disclosure. FIG. 9 is a partial perspective view schematically illustrating a part of the first frame 121 and the coupling plate 123 of the battery module 100 according to an embodiment of the present disclosure. For reference, FIG. 7 illustrates an enlarged view of an area A in FIG. 3, and FIG. 9 illustrates an enlarged view of an area B in FIG. 8.

Referring to FIGS. 7 to 9 together with FIG. 2 again, at least one coupling groove H may be defined in the second extension part 122b of the second frame 122 of the battery module 100 according to an embodiment of the present disclosure. For example, as illustrated in FIG. 7, a plurality of coupling grooves H spaced a predetermined gap from each other may be defined in the second extension part 122b. For example, three coupling grooves H may be defined. The coupling groove H may not be welded to the coupling plate 123, or an inner surface of the coupling groove H and a portion of the coupling plate 123 may be welded to each other so as to increase the bonding force between the second extension part 122b and the coupling plate 123. As illustrated in FIG. 7, the coupling groove H may have, for example, a rectangular groove shape when viewed from a side.

The coupling plate 123 may include a protruding insertion part 123a inserted into the coupling groove H. For example, as in FIG. 9, the protruding insertion part 123a is provided on the upper end (the second portion) of the coupling plate 123. The protruding insertion part 123a may have a shape protruding from the end of the coupling plate 123. The protruding shape may correspond to the coupling groove H. That is, the coupling groove H and the protruding insertion part 123a may be engaged with and coupled to each other. For example, as in FIG. 9, the protruding insertion part 123a of the coupling plate 123 may have a rectangular protruding shape when viewed from a side. The protruding insertion part 123a may be welded to the coupling groove H as necessary, so as to increase the bonding force between the coupling plate 123 and the second extension part 122b.

According to such a configuration of the present disclosure, in the battery module 100 according to an embodiment of the present disclosure, the coupling groove H is defined in the second extension part 122b of the second frame 122, and the coupling plate 123 includes the protruding insertion part 123a coupled to the coupling groove H. The coupling structure of the coupling groove H and the protruding insertion part 123a may restrict movement of the second extension part 122b in a forward-backward direction (the Y axis direction) when the second extension part 122b is disposed above the coupling plate 123. Accordingly, the welding of the second extension part 122b to the coupling plate 123 may be stably performed. The battery module 100 according to the present disclosure may increase the bonding force between the second frame 122 and the coupling plate 123 and thus, may effectively increase the durability of the module housing 120.

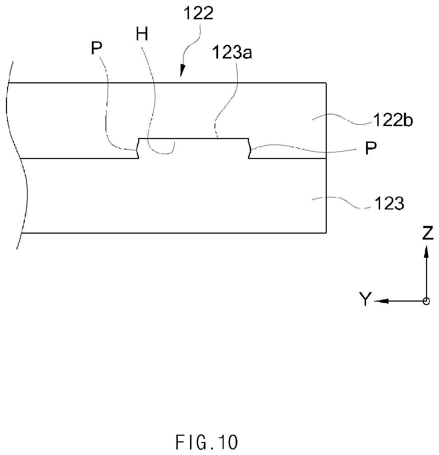

FIG. 10 is a partial side view schematically illustrating a part of a second frame 122 and a coupling plate 123 of a battery module 100 according to another embodiment of the present disclosure.

Referring to FIG. 10 together with FIG. 2 again, the battery module 100 according to the other embodiment of the present disclosure may have the same configuration as the battery module 100 in FIG. 2 except that a protruding insertion part 123a of the coupling plate 123 further includes a wedge-shaped protrusion P.

The battery module 100 according to the other embodiment of the present disclosure in FIG. 10 may further include the wedge-shaped protrusion P that presses an inner side surface of a coupling groove H. The wedge-shaped protrusion P may be provided on the protruding insertion part 123a of the coupling plate 123. For example, as in FIG. 10, the wedge-shaped protrusion P may be provided on each of two side portions of the protruding insertion part 123a in forward and backward directions (the negative direction and positive direction of the Y axis). The wedge-shaped protrusion P may have a shape protruding from an end of the protruding insertion part 123a toward the coupling groove H. For example, as illustrated in FIG. 10, the wedge-shaped protrusion P of the coupling plate 123 may have a shape rounded and protruding toward an inner surface of the coupling groove H. The wedge-shaped protrusions P may be provided on a front end and rear end of the protruding insertion part 123a, respectively. The wedge-shaped protrusions P provided on the front end and rear end of the protruding insertion part 123a, respectively, may have shapes protruding in the forward direction and in the backward direction, respectively, so as to press the coupling groove H defined in a second extension part 122b of a second frame 122. The protruding insertion part 123a may be coupled to the coupling groove H in a state in which the wedge-shaped protrusion P presses the coupling groove H.

According to such a configuration of the present disclosure, the battery module 100 according to the present disclosure includes the wedge-shaped protrusion P provided on the protruding insertion part 123a of the coupling plate 123 and thus, may effectively increase the bonding force between the coupling groove H, which is defined in the second extension part 122b of the second frame 122, and the protruding insertion part 123a of the coupling plate 123. Accordingly, the battery module 100 according to the present disclosure may increase the bonding force between the second frame 122 and the coupling plate 123 and thus, may effectively increase the durability of the module housing 120.

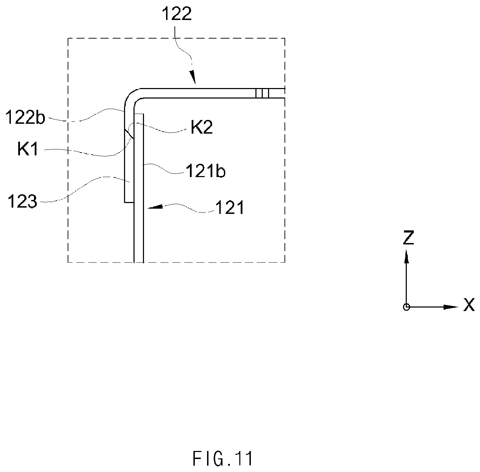

FIG. 11 is a partial front view schematically illustrating a part of a module housing 120 of a battery module 100 according to another embodiment of the present disclosure.

Referring to FIG. 11 together with FIGS. 2 and 3 again, in the battery module 100 according to the other embodiment of the present disclosure, a portion of a second extension part 122b, which is coupled to a second portion of a coupling plate 123, may have a first inclined surface K1. The second extension part 122b of a second frame 122 may have the first inclined surface K1 at at least a portion of the second portion coupled to the coupling plate 123. For example, as in FIG. 11, a bottom surface of the second extension part 122b, which is coupled to a top surface of the coupling plate 123, may have the first inclined surface K1.

The second portion of the coupling plate 123, which is coupled to the second extension part 122b, may have a second inclined surface K2 parallel to the first inclined surface K1. At least a portion of an end (the second portion) of the coupling plate 123, which is coupled to the second extension part 122b of the second frame 122, may have the second inclined surface K2. For example, as in FIG. 11, at least a portion of the top surface of the coupling plate 123, which is coupled to the bottom surface of the second extension part 122b of the second frame 122, may have the second inclined surface K2.

Thus, according to such a configuration of the present disclosure, in the battery module 100 according to the present disclosure includes, the at least portions of the ends of the second extension part 122b of the second frame 122 and the coupling plate 123, which are coupled to each other, have the first inclined surface K1 and the second inclined surface K2, respectively, so that the coupling area between the second extension part 122b of the second frame 122 and the coupling plate 123 may increase. Accordingly, the battery module 100 according to the present disclosure may increase the bonding force between the second frame 122 and the coupling plate 123 and thus, may effectively increase the durability of the module housing 120.

More specifically, the first inclined surface K1 may have a shape in which the height of the inclined surface gradually decreases toward the inside of the battery module 100. For example, as illustrated in FIG. 11, the first inclined surface K1 may have a shape in which the height gradually decreases toward a first extension part 121b of a first frame 121. The second inclined surface K2 may have a shape in which the height of the inclined surface gradually increases toward the outside (in the negative direction or positive direction of the X axis) of the battery module 100. For example, as illustrated in FIG. 11, the second inclined surface K2 of the coupling plate 123 may have a shape in which the height of the inclined surface gradually increases in a direction opposite to the direction toward the first extension part 121b of the first frame 121. Here, the first inclined surface K1 and the second inclined surface K2 may be parallel to each other, and the first inclined surface K1 and the second inclined surface K2 may be disposed to be in close contact with each other. The second extension part 122b may be supported by the second inclined surface K2 of the coupling plate 123 in the upward direction. Here, downward force of gravity along the second inclined surface K2 and force moving toward the first extension part 121b of the first frame 121 may be generated in the second extension part 122b. Accordingly, the second extension part 122b may be disposed to be in close contact with an outer surface of the first extension part 121b of the first frame 121.

Thus, according to such a configuration of the present disclosure, in the battery module 100 according to the present disclosure, the first inclined surface K1 has the shape in which the height of the inclined surface gradually decreases toward the inside of the battery module 100, and the second inclined surface K2 has the shape in which the height of the inclined surface gradually increases toward the outside of the battery module 100. Thus, due to the coupling structure of the first inclined surface K1 and the second inclined surface K2, the second extension part 122b of the second frame 122 may be stably fixed in position, without being separated, at a position facing the coupling plate 123. Accordingly, in the battery module 100 according to the present disclosure, the second extension part 122b of the second frame 122 may be stably fixed to one side of the coupling plate 123 to increase efficiency of the coupling process, such as welding, between the second extension part 122b of the second frame 122 and the coupling plate 123.

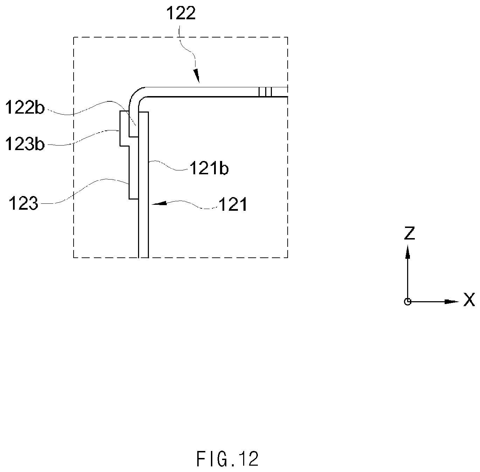

FIG. 12 is a partial front view schematically illustrating a part of a module housing 120 of a battery module according to further another embodiment of the present disclosure.

Referring to FIG. 12 together with FIG. 2, in the battery module according to further another embodiment of the present disclosure, a stopper 123b may be further provided in a coupling plate 123 when compared to the battery module 100 in FIG. 2. The other components of the battery module 100 in FIG. 12 may be the same as those of the battery module 100 in FIG. 2.

The coupling plate 123 of a battery module 100 according to further another embodiment of the present disclosure may include the stopper 123b that blocks a second extension part 122b of a second frame 122 from being out of a position to be coupled to the coupling plate 123. The stopper 123b may be provided to extend from a second portion (upper end) so as to surround an outer side of the second extension part 122b. The stopper 123b may be disposed to face an outer side surface (in the negative direction or positive direction of the X axis) of the second extension part 122b of the second frame 122. For example, as in FIG. 12, the coupling plate 123 of the battery module 100 according to the present disclosure may include the stopper 123b having a shape bent outward (in the negative direction of the X axis) from an upper end of the coupling plate 123 and then bent upward (in the Z axis direction). The stopper 123b may support an end of the second extension part 122b of the second frame 122 in a direction toward a first extension part 121b of a first frame 121. That is, the second extension part 122b may be interposed between the stopper 123b and the first extension part 121b. Although not separately illustrated, the coupling plate 123 disposed at a right side of the battery module 100 may include the stopper 123b that plays the same role. That is, the coupling plate 123 disposed at the right side may include the stopper 123b that performs the blocking so as to stably fix the second extension part 122b of the second frame 122 disposed at the right side of the battery module 100. For example, as in FIG. 12, the stopper 123b may have a shape bent outward (in the negative direction of the X axis) from the upper end of the coupling plate 123 and then bent upward (in the Z axis direction). Although not separately illustrated, the stopper 123b provided in the coupling plate 123 disposed at the right side of the battery module 100 may have a shape bent outward (in the positive direction of the X axis) from the upper end of the coupling plate 123 and then bent upward (in the Z axis direction).

Thus, according to such a configuration of the present disclosure, the coupling plate 123 of the battery module 100 according to further another embodiment of the present disclosure includes the stopper 123b protruding and extending from the one end so as to surround and face the outer side surface of the second extension part 122b of the second frame 122, so that the second extension part 122b of the second frame 122 may be stably fixed to one side of the coupling plate 123. Thus, the process of coupling the second extension part 122b to the coupling plate 123 may be rapidly performed without using a separate fixing jig, and also the coupling (welding) reliability may increase.

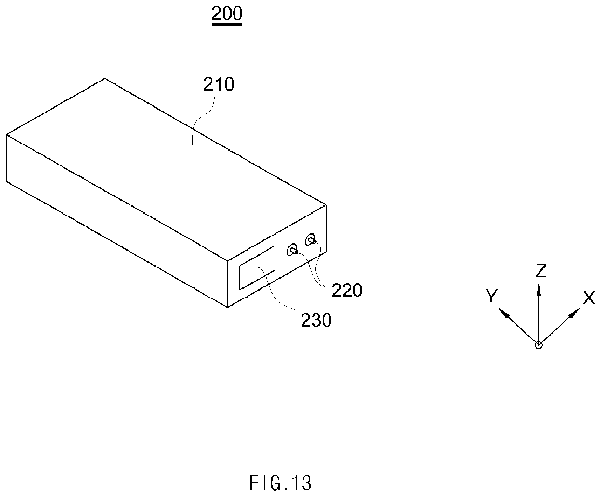

FIG. 13 is a perspective view schematically illustrating a battery pack 200 according to an embodiment of the present disclosure.

Referring to FIG. 13 together with FIG. 2, the present disclosure provides the battery pack 200 including at least one battery module 100 according to an embodiment. Specifically, the battery pack 200 according to the present disclosure may include a battery management system (BMS) 230 that controls a charging-discharging of the battery module 100. The battery pack 200 may include external output terminals 220 provided at a front end. In such a battery pack 200, already well-known components may be applied to a busbar, a pack housing, etc., and thus, the description of these components will be omitted.

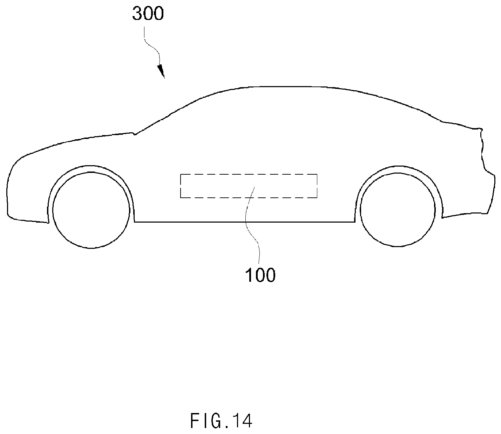

FIG. 14 is a schematic diagram schematically illustrating a vehicle 300 according to an embodiment of the present disclosure.

Referring to FIG. 14 together with FIG. 2 again, the present disclosure provides the vehicle 300 including at least one battery module 100 according to an embodiment of the present disclosure. The vehicle 300 according to the present disclosure may include a body (chassis) having an upper portion in which the battery module 100 is mounted. The vehicle 300 may be, for example, a hybrid vehicle or an electric vehicle.

Referring to FIGS. 2 and 3 again, the present disclosure provides a method for manufacturing the battery module 100 according to an embodiment of the present disclosure. Referring to FIGS. 2 to 4 again, the method for manufacturing the battery module 100 includes preparing at least one battery cell 110, preparing a first frame 121 having an accommodation space, in which the at least one battery cell 110 is accommodated, and provided with a body 121a and first extension parts 121b that extend from two ends of the body 121a, respectively, in at least one direction, mounting the at least one battery cell 110 in the accommodation space of the first frame 121, preparing a second frame provided with a cover 122a, which faces the body 121a and covers the accommodation space, and second extension parts that extend from two ends of the cover 122a, respectively, in at least one direction and face the first extension parts, respectively, coupling each of a plurality of coupling plates 123 to an outer surface of each of the first extension parts so as to be spaced apart in a direction that is away from an end of the first extension part 121b of the first frame 121 in an extension direction, and coupling a second portion to the second extension part 122b. The coupling plate 123 may include a first portion, which is a plate-shaped wide surface coupled to an outer side of the first extension part 121b, and the second portion coupled to an end of each of the second extension parts 122b. The coupling of each of the first portion and the second portion may be performed through welding.

Thus, according to such a configuration of the present disclosure, in the method for manufacturing the battery module 100 according to the present disclosure, the second extension parts 122b of the second frame 122 are coupled to a plurality of separate coupling plates 123 but not coupled to the first extension parts 121b of the first frame 121. Thus, when compared to the module housing 20 according to the related art in FIG. 1 having the structure in which the upper cover 21 and the lower frame 22 are directly coupled to each other, it is not necessary to increase the thickness of the first frame 121 or the second frame 122 so as to increase the coupling area of the first frame 121 or the second frame 122. Accordingly, the battery module 100 according to the present disclosure may reduce material costs of the module housing 120, and the weight reduction of the battery module 100 may be achieved.

Moreover, the method for manufacturing the battery module 100 according to the present disclosure includes the coupling plate 123 spaced apart in a direction that is away from the end of the first extension part 121b of the first frame 121 in the extension direction, so that the coupling portion between the coupling plate 123 and the second extension part 122b of the second frame 122 is excellent in resistance to pressurization caused by the swelling (volume expansion) of the battery cell accommodated in the module housing 20. Thus, when compared to the coupling portion formed on the edge of the module housing 20 according to the related art in FIG. 1, a breakage or separation between the coupling plate 123 and the second extension part 122b of the second frame 122 may be relatively reduced.

The battery module 100 according to the present disclosure includes the separate coupling plate 123. Thus, when compared to the structure in which the upper cover 21 and the lower frame 22 are directly coupled to each other like the module housing 20 of the battery module according to the related art in FIG. 1, it is not necessary to increase the thickness of the first frame 121 or second frame 122 of the module housing 120 so as to increase the coupling area of the first frame 121 or the second frame 122 and thus, the manufacturing costs may be reduced and the weight reduction of the battery module 100 may be achieved.

Moreover, in the battery module 100 according to the present disclosure, the coupling plates 123 may be welded to an outer side surface of the first extension part 121b and an end of the second extension part 122b in an extension direction, respectively. That is, the first portion of the coupling plate 123 and the outer side of the first extension part 121b may be coupled to each other by welding. The second portion of the coupling plate 123 and the end of the second extension part 122b may be coupled to each other by welding. For example, an inner side surface (right side surface or left side surface) of the coupling plate 123 may be welded to an outer side surface (left side surface or right side surface) of the first extension part 121b. A top surface of the coupling plate 123 may be welded to a bottom surface of the first extension part 121b.

Furthermore, at least two of the coupling plate 123, the first extension part 121b, or the second extension part 122b may include the same material. For example, the at least two of the coupling plate 123, the second extension part 122b, or the second extension part 122b may include, as the same material, at least one of steel, an aluminum alloy, or stainless steel. For example, the second extension part 122b and the coupling plate 123 may include, as the same material, an aluminum alloy material, and the first extension part 121b may include stainless steel.

Thus, according to such a configuration of the present disclosure, in the method for manufacturing the battery module 100 according to the present disclosure, the least two of the coupling plate 123, the first extension part 121b, or the second extension part 122b include the same material so that similar metal welding between the components may be possible. In particular, even when the first extension part 121b and the second extension part 122b include different metals, the coupling plate 123 includes the same metal as the second extension part 122b so that even when the coupling area between the coupling plate 123 and the second extension part 122b is small, the similar metal welding may be performed as a welding process to secure the high bonding force.

**[Description of the Symbols]**

| | | | | |
|---|---|---|---|---|
| 20: | Module case | | 21, 22: | Upper cover, Lower frame |
| 100: | Battery module | | 110: | Battery cell |
| 120: | Module housing | | 121, 122: | First frame, Second frame |
| 121a, 122a: | Body, Cover | | | |
| 121b, 122b: | First extension part, Second extensionpart | | | |
| 123: | Coupling plate | | | |
| H: | Coupling hole | | 123a: | Protruding insertion part |
| P: | Wedge-shaped protrusion | | K1, K2: | First inclined surface, Second inclined surface |
| 123b: | Stopper | | | |
| 200: | Battery pack | | 300: | Vehicle |

## Claims

1. A battery module (100) comprising:
at least one battery cell (110); and
a module housing (120),
wherein the module housing (120) comprises
a first frame (121) provided with a body (121a) and first extension parts (121b) extending from two ends of the body (121), respectively, in at least one direction so as to define an accommodation space in which the at least one battery cell (110) is accommodated,
a second frame (122) provided with a cover (122a) facing the body (121a) and configured to cover the accommodation space, and second extension parts (122b) extending from two ends of the cover (122a), respectively, in at least one direction and disposed to face the first extension parts (121b), respectively,
**characterized in that** the battery module further comprises a coupling plate (123) spaced apart from an end (E) of the first extension part (121b) of the first frame (121) in an extension direction of the first extension part (121b), and comprising a first portion coupled by welding to an outer side surface of the first extension part (121b), and a second portion coupled by welding to an end of the second extension part (122b) in the extension direction, the second portion facing and being in contact with an end of the second extension part (122b),
wherein the first portion and the second portion are disposed on different planes;
the first portion of the coupling plate (123) being a plate-shaped wide surface of the coupling plate (123) disposed to be in contact with an outer side surface of the first extension part (121b); and
the second extension part (122b) having an inner side surface facing the outer side surface of the first extension part (121b) and being disposed at a position closer to the cover (122a) than the first portion.

2. The battery module (100) of claim 1, wherein:
a coupling groove (H) is defined in the second extension part (122b) of the second frame (122), wherein the coupling groove (H) has a shape recessed from an end of the second extension part (122b) in an extension direction toward a direction opposite to the extension direction; and
in the coupling plate (123), the second portion comprises a protruding insertion part (123a) protruding from an end of the coupling plate (123) so as to be inserted into the coupling groove (H).

3. The battery module (100) of claim 2, the protruding insertion part (123a) comprises a wedge-shaped protrusion (P) protruding from an end of the protruding insertion part (123a) so as to press an inner side surface of the coupling groove (H).

4. The battery module (100) of claim 1, wherein:
a portion of the second extension part (122b), which is coupled to the second portion of the coupling plate (123), has a first inclined surface (K1); and
the second portion of the coupling plate (123), which is coupled to the second extension part (122b), has a second inclined surface (K2) parallel to the first inclined surface (K1).

5. The battery module (100) of claim 4, wherein:
the first inclined surface (K1) has a shape of which a height of the first inclined surface (K1) gradually decreases toward the inside of the battery module (100); and
the second inclined surface (K2) has a shape of which a height of the second inclined surface (K2) gradually increases toward the outside of the battery module (100).

6. The battery module (100) of claim 1, wherein:
the first portion is a plate-shaped wide surface of the coupling plate (123), and the second portion faces and is in contact with an end of the second extension part (122b); and
the coupling plate (123) further comprises a stopper extending from the second portion so as to surround the second extension part (122b).

7. The battery module (100) of claim 1, wherein the coupling plate (123) is elongated in a direction parallel to the first extension part (121b) and the second extension part (122b) .

8. A battery pack (200) comprising at least one battery module (100) according to any one of claims 1 to 7.

9. A vehicle (300) comprising at least one battery module (100) according to any one of claims 1 to 8.

10. A method for manufacturing the battery module (100) according to claim 1, the method comprising:
preparing at least one battery cell (110);
preparing a first frame (121) having an accommodation space, in which the at least one battery cell (100) is accommodated, and provided with a body (121a) and first extension parts (121b) extending from two ends of the body (121a), respectively, in at least one direction;
mounting the at least one battery cell (110) in the accommodation space of the first frame (121);
preparing a second frame (122) provided with a cover (122a) facing the body (121a) and configured to cover the accommodation space, and second extension parts (122b) extending from two ends of the cover (121a), respectively, in at least one direction and disposed to face the first extension parts (122b), respectively;
coupling by welding each of a plurality of coupling plates (123) to an outer surface of each of the first extension parts (121b) so as to be spaced apart in a direction that is away from an end (E) of the first extension part (121b) of the first frame (121) in an extension direction, wherein the coupling plate (123) comprises a first portion that is a plate-shaped wide surface coupled to an outer side of the first extension part (121b), and a second portion to be coupled to an end of each of the second extension parts (122b); and
coupling the second portion to the second extension part (122b),
wherein the first portion and the outer side of the first extension part (121b) are coupled to each other by welding;
the second portion and the end of the second extension part (122b) are coupled to each other by welding; and
at least two of the coupling plate (123), the first extension part (121b), or the second extension part (122b) include the same material.

## Patentansprüche

1. Batteriemodul (100), umfassend:
wenigstens eine Batteriezelle (110); und
ein Modulgehäuse (120),
wobei das Modulgehäuse (120) umfasst:
einen ersten Rahmen (121), welcher mit einem Körper (121a) und ersten Erweiterungsteilen (121b) bereitgestellt ist, welche sich jeweils in wenigstens einer Richtung von zwei Enden des Körpers (121) erstrecken, um einen Aufnahmeraum zu definieren, in welchem die wenigstens eine Batteriezelle (110) aufgenommen ist,
einen zweiten Rahmen (122), welcher mit einer Abdeckung (122a), welche dem Körper (121a) zugewandt ist und welche dazu eingerichtet ist, den Aufnahmeraum abzudecken, und zweiten Erweiterungsteilen (122b) bereitgestellt ist, welche sich jeweils in wenigstens einer Richtung von zwei Enden der Abdeckung (122a) erstrecken und angeordnet sind, um jeweils den ersten Erweiterungsteilen (121b) zugewandt zu sein,
**dadurch gekennzeichnet, dass** das Batteriemodul ferner eine Kopplungsplatte (123) umfasst, welche von einem Ende (E) des ersten Erweiterungsteils (121b) des ersten Rahmens (121) in einer Erweiterungsrichtung des ersten Erweiterungsteils (121b) beabstandet ist und welche einen ersten Abschnitt, welcher durch Schweißen mit einer äußeren Seitenfläche des ersten Erweiterungsteils (121b) gekoppelt ist, sowie einen zweiten Abschnitt umfasst, welcher durch Schweißen mit einem Ende des zweiten Erweiterungsteils (122b) in der Erweiterungsrichtung gekoppelt ist, wobei der zweite Abschnitt in Kontakt einem Ende des zweiten Erweiterungsteils (122b) zugewandt ist und mit diesem in Kontakt ist,
wobei der erste Abschnitt und der zweite Abschnitt an unterschiedlichen Ebenen angeordnet sind;
wobei der erste Abschnitt der Kopplungsplatte (123) eine plattenförmige weite Fläche der Kopplungsplatte (123) ist, welche angeordnet ist, um in Kontakt mit einer äußeren Seitenfläche des ersten Erweiterungsteils (121b) zu sein; und
wobei der zweite Erweiterungsteil (122b) eine innere Seitenfläche aufweist, welche der äußeren Seitenfläche des ersten Erweiterungsteils (121b) zugewandt ist und welche an einer Position angeordnet ist, welche näher zu der Abdeckung (122a) als der erste Abschnitt ist.

2. Batteriemodul (100) nach Anspruch 1, wobei:
eine Kopplungsnut (H) in dem zweiten Erweiterungsteil (122b) des zweiten Rahmens (122) definiert ist, wobei die Kopplungsnut (H) eine Form aufweist, welche von einem Ende des zweiten Erweiterungsteils (122b) in einer Erweiterungsrichtung in Richtung einer Richtung vertieft ist, welche entgegengesetzt zu der Erweiterungsrichtung ist; und
in der Kopplungsplatte (123), der zweite Abschnitt einen hervorstehenden Einführteil (123a) umfasst, welcher von einem Ende der Kopplungsplatte (123) hervorsteht, um in die Kopplungsnut (H) eingeführt zu sein.

3. Batteriemodul (100) nach Anspruch 2, wobei der hervorstehende Einführteil (123a) einen keilförmigen Vorsprung (P) umfasst, welcher von einem Ende des hervorstehenden Einführteils (123a) hervorsteht, um eine innere Seitenfläche der Kopplungsnut (H) zu pressen.

4. Batteriemodul (100) nach Anspruch 1, wobei:
ein Abschnitt des zweiten Erweiterungsteils (122b), welcher mit dem zweiten Abschnitt der Kopplungsplatte (123) gekoppelt ist, eine erste geneigte Fläche (K1) aufweist; und
der zweite Abschnitt der Kopplungsplatte (123), welcher mit dem zweiten Erweiterungsteil (122b) gekoppelt ist, eine zweite geneigte Fläche (K2) aufweist, welche parallel zu der ersten geneigten Fläche (K1) ist.

5. Batteriemodul (100) nach Anspruch 4, wobei:
die erste geneigte Fläche (K1) eine Form aufweist, bei welcher eine Höhe der ersten geneigten Fläche (K1) in Richtung der Innenseite des Batteriemoduls (100) graduell abnimmt; und
die zweite geneigte Fläche (K2) eine Form aufweist, bei welcher eine Höhe der zweiten geneigten Fläche (K2) in Richtung der Außenseite des Batteriemoduls (100) graduell zunimmt.

6. Batteriemodul (100) nach Anspruch 1, wobei:
der erste Abschnitt eine plattenförmige weite Fläche der Kopplungsplatte (123) ist, und wobei der zweite Abschnitt einem Ende des zweiten Erweiterungsteils (122b) zugewandt ist und mit diesem in Kontakt ist; und
die Kopplungsplatte (123) ferner eine Stoppeinheit umfasst, welche sich von dem zweiten Abschnitt erstreckt, um den zweiten Erweiterungsteil (122b) zu umgeben.

7. Batteriemodul (100) nach Anspruch 1, wobei die Kopplungsplatte (123) in einer Richtung länglich ist, welche parallel zu dem ersten Erweiterungsteil (121b) und dem zweiten Erweiterungsteil (122b) ist.

8. Batteriepack (200), umfassend wenigstens ein Batteriemodul (100) nach einem der Ansprüche 1 bis 7.

9. Fahrzeug (300), umfassend wenigstens ein Batteriemodul (100) nach einem der Ansprüche 1 bis 8.

10. Verfahren zum Herstellen des Batteriemoduls (100) nach Anspruch 1, wobei das Verfahren umfasst:
Vorbereiten wenigstens einer Batteriezelle (110);
Vorbereiten eines ersten Rahmens (121), welcher einen Aufnahmeraum aufweist, in welchem die wenigstens eine Batteriezelle (100) aufgenommen ist, und welcher mit einem Körper (121a) und ersten Erweiterungsteilen (121b) bereitgestellt ist, welche sich jeweils in wenigstens einer Richtung von zwei Enden des Körpers (121a) erstrecken;
Montieren der wenigstens einen Batteriezelle (110) in dem Aufnahmeraum des ersten Rahmens (121);
Vorbereiten eines zweiten Rahmens (122), welcher mit einer Abdeckung (122a), welche dem Körper (121a) zugewandt ist und welche dazu eingerichtet ist, den Aufnahmeraum abzudecken, und zweiten Erweiterungsteilen (122b) bereitgestellt ist, welche sich jeweils in wenigstens einer Richtung von zwei Enden der Abdeckung (121a) erstrecken und angeordnet sind, um jeweils den ersten Erweiterungsteilen (121b) zugewandt zu sein,
Koppeln durch Schweißen jeder aus einer Mehrzahl von Kopplungsplatten (123) an eine äußere Fläche jedes der ersten Erweiterungsteile (121b), um in einer Richtung beabstandet zu sein, welche in einer Erweiterungsrichtung weg von einem Ende (E) des ersten Erweiterungsteils (121b) des ersten Rahmens (121) ist, wobei die Kopplungsplatte (123) einen ersten Abschnitt, welcher eine plattenförmige weite Fläche ist, welche mit einer äußeren Seite des ersten Erweiterungsteils (121b) gekoppelt ist, und einen zweiten Abschnitt umfasst, um mit einem Ende jedes der zweiten Erweiterungsteile (122b) gekoppelt zu sein; und
Koppeln des zweiten Abschnitts mit dem zweiten Erweiterungsteil (122b),
wobei der erste Abschnitt und die äußere Seite des ersten Erweiterungsteils (121b) miteinander durch Schweißen gekoppelt sind;
wobei der zweite Abschnitt und das Ende des zweiten Erweiterungsteils (122b) miteinander durch Schweißen gekoppelt sind; und
wenigstens zwei aus der Kopplungsplatte (123), dem ersten Erweiterungsteil (121b) oder dem zweiten Erweiterungsteil (122b) das gleiche Material umfassen.

## Revendications

1. Module de batterie (100) comprenant :
au moins un élément de batterie (110) ; et
un boîtier de module (120),
dans lequel le boîtier de module (120) comprend
un premier cadre (121) doté d'un corps (121a) et de premières parties d'extension (121b) s'étendant à partir de deux extrémités du corps (121), respectivement, dans au moins une direction de manière à définir un espace de réception dans lequel l'au moins un élément de batterie (110) est reçu,
un second cadre (122) doté d'un couvercle (122a) faisant face au corps (121a) et configuré pour recouvrir l'espace de réception, et de secondes parties d'extension (122b) s'étendant à partir de deux extrémités du couvercle (122a), respectivement, dans au moins une direction et disposées pour faire face aux premières parties d'extension (121b), respectivement,
**caractérisé en ce que** le module de batterie comprend en outre une plaque d'accouplement (123) espacée d'une extrémité (E) de la première partie d'extension (121b) du premier cadre (121) dans une direction d'extension de la première partie d'extension (121b), et comprenant une première portion accouplée par soudure à une surface latérale extérieure de la première partie d'extension (121b), et une seconde portion accouplée par soudure à une extrémité de la seconde partie d'extension (122b) dans la direction d'extension, la seconde portion faisant face à et étant en contact avec une extrémité de la seconde partie d'extension (122b),
dans lequel la première portion et la seconde portion sont disposées sur des plans différents ;
la première portion de la plaque d'accouplement (123) étant une surface large en forme de plaque de la plaque d'accouplement (123) disposée pour être en contact avec une surface latérale extérieure de la première partie d'extension (121b) ; et
la seconde partie d'extension (122b) ayant une surface latérale intérieure faisant face à la surface latérale extérieure de la première partie d'extension (121b) et étant disposée à une position plus proche du couvercle (122a) que la première portion.

2. Module de batterie (100) selon la revendication 1, dans lequel :
une rainure d'accouplement (H) est définie dans la seconde partie d'extension (122b) du second cadre (122), dans lequel la rainure d'accouplement (H) a une forme en creux d'une extrémité de la seconde partie d'extension (122b) dans une direction d'extension vers une direction opposée à la direction d'extension ; et
dans la plaque d'accouplement (123), la seconde portion comprend une partie d'insertion saillante (123a) faisant saillie depuis une extrémité de la plaque d'accouplement (123) de manière à être insérée dans la rainure d'accouplement (H).

3. Module de batterie (100) selon la revendication 2, la partie d'insertion saillante (123a) comprend une saillie en forme de coin (P) faisant saillie depuis une extrémité de la partie d'insertion saillante (123a) de manière à appuyer sur une surface latérale intérieure de la rainure d'accouplement (H).

4. Module de batterie (100) selon la revendication 1, dans lequel :
une portion de la seconde partie d'extension (122b), qui est accouplée à la seconde portion de la plaque d'accouplement (123), a une première surface inclinée (K1) ; et la seconde portion de la plaque d'accouplement (123), qui est accouplée à la seconde partie d'extension (122b), a une seconde surface inclinée (K2) parallèle à la première surface inclinée (K1).

5. Module de batterie (100) selon la revendication 4, dans lequel :
la première surface inclinée (K1) a une forme où une hauteur de la première surface inclinée (K1) diminue progressivement vers l'intérieur du module de batterie (100) ; et
la seconde surface inclinée (K2) a une forme où une hauteur de la seconde surface inclinée (K2) augmente progressivement vers l'extérieur du module de batterie (100).

6. Module de batterie (100) selon la revendication 1, dans lequel :
la première portion est une surface large en forme de plaque de la plaque d'accouplement (123), et la seconde portion fait face à et est en contact avec une extrémité de la seconde partie d'extension (122b) ; et
la plaque d'accouplement (123) comprend en outre une butée s'étendant à partir de la seconde portion de manière à entourer la seconde partie d'extension (122b).

7. Module de batterie (100) selon la revendication 1, dans lequel la plaque d'accouplement (123) est allongée dans une direction parallèle à la première partie d'extension (121b) et à la seconde partie d'extension (122b).

8. Bloc-batterie (200) comprenant au moins un module de batterie (100) selon l'une quelconque des revendications 1 à 7.

9. Véhicule (300) comprenant au moins un module de batterie (100) selon l'une quelconque des revendications 1 à 8.

10. Procédé pour fabriquer le module de batterie (100) selon la revendication 1, le procédé comprenant :
la préparation d'au moins un élément de batterie (110) ;
la préparation d'un premier cadre (121) ayant un espace de réception, dans lequel l'au moins un élément de batterie (100) est reçu, et doté d'un corps (121a) et de premières parties d'extension (121b) s'étendant à partir de deux extrémités du corps (121a), respectivement, dans au moins une direction ;
le montage de l'au moins un élément de batterie (110) dans l'espace de réception du premier cadre (121) ;
la préparation d'un second cadre (122) doté d'un couvercle (122a) faisant face au corps (121a) et configuré pour recouvrir l'espace de réception, et de secondes parties d'extension (122b) s'étendant à partir de deux extrémités du couvercle (121a), respectivement, dans au moins une direction et disposées pour faire face aux premières parties d'extension (122b), respectivement ;
l'accouplement par soudure de chacune d'une pluralité de plaques d'accouplement (123) à une surface extérieure de chacune des premières parties d'extension (121b) de manière à ce qu'elles soient espacées dans une direction qui s'éloigne d'une extrémité (E) de la première partie d'extension (121b) du premier cadre (121) dans une direction d'extension, dans lequel la plaque d'accouplement (123) comprend une première portion qui est une surface large en forme de plaque accouplée à un côté extérieur de la première partie d'extension (121b), et une seconde portion devant être accouplée à une extrémité de chacune des secondes parties d'extension (122b) ; et
l'accouplement de la seconde portion à la seconde partie d'extension (122b),
dans lequel la première portion et le côté extérieur de la première partie d'extension (121b) sont accouplés l'un à l'autre par soudure ;
la seconde portion et l'extrémité de la seconde partie d'extension (122b) sont accouplées l'une à l'autre par soudure ; et
au moins deux parmi la plaque d'accouplement (123), la première partie d'extension (121b) ou la seconde partie d'extension (122b) comprennent le même matériau.
